Europäisches Patentamt

European Patent Office

Office européen des brevets

(19)

(11) Publication number: **0 005 075**
**B1**

(12) **EUROPEAN PATENT SPECIFICATION**

(45) Date of publication of patent specification: **14.07.82**

(21) Application number: **79300684.2**

(22) Date of filing: **24.04.79**

(51) Int. Cl.³: **E 04 G 21/12,**
**F 16 G 11/04, E 04 C 5/16**

(54) Connecting device for wires.

(30) Priority: **25.04.78 GB 1630778**

(43) Date of publication of application:
**31.10.79 Bulletin 79/22**

(45) Publication of the grant of the patent:
**14.07.82 Bulletin 82/28**

(84) Designated Contracting States:
**DE FR**

(56) References cited:
**US - A - 1 680 913**
**US - A - 3 888 596**

(73) Proprietor: **Stronghold International AG**
**Aeulestrasse 772**
**0490 Vaduz (LI)**

(72) Inventor: **Caro Roqueta, Eduardo**
**C/ Mallorca, 519-3 -2a**
**Barcelona (ES)**

(74) Representative: **Paget, Hugh Charles Edward et al,**
**MEWBURN ELLIS & CO. 2/3 Cursitor Street**
**London EC4A 1BQ (GB)**

Courier Press, Leamington Spa, England.

Connecting device for wires

The present invention relates to a device for connecting in series two wires which are to be placed under tension, said device comprising a block having two opposite ends, two bores each extending from one end to the other end of the block to receive the respective wires and two anchoring means respectively associated with respective first ends of the bores for anchoring the two tensioned lengths of the wires respectively at the opposite ends of the block with the tensioned lengths extending through the respective bores and exiting at respective second ends of the bores, each bore, over at least a substantial portion of its length extending away from said first end thereof, having a straight longitudinal axis and each bore being so shaped as to permit the wire within the bore to curve away from said straight axis adjacent the second end of the bore. Such a device is known from U.K. patent specification 1,467,309.

Such devices are particularly applicable in the field of concrete reinforced by prestressed or post-stressed wires. In this specification, including the claims, we mean by the word "wire" to include strand, cable and other multiply wires used e.g. in concrete reinforcement, as well as single-filament wires. The invention is applicable to all such different forms of tendon.

U.K. patent specification 1,467,309 describes the construction and operation of a device for connecting two wires, particularly in reinforced concrete work. The device is a block having parallel bores for the respective wires, and anchoring means (specifically longitudinally split conical wedges) for anchoring the wire at one end of each bore with the tensioned length extending through the bore. Since the device of the present invention is used in generally the same way as this known device, reference should be made to U.K. patent specification 1,467,309 for a full description of that device and its use.

In practice this known device suffers certain disadvantages. Firstly, when the jack is applied to one end of the device in order to pull one wire through the device (thereby tensioning both wires), the other wire is often an obstruction since it exits from the device at the same end. Secondly if the device is joining two wires at a point which is located in a flat array of parallel wires, the wire adjacent the wires being joined may obstruct the operation of the jack, and it may not be possible to operate the jack from both above and below the array of wires (as is necessary if it is desired to apply the jack to both the wires being connected by the device). A further disadvantage of the known device as illustrated is that the tensioned wires are given a sharp bend where they exit from the bores; this creates friction when the wires are being tensioned, leading to a need for excessive force and inexact tensioning. Reduction of this effect by providing appropriate oblique edges or curved portions at the mouths of the bores is mentioned.

USA patent 1,680,913 discloses a connector for tensioned tie rods extending around a silo. Because the tie rods are not parallel or coaxial, the paths for the rods in the connector are angled to each other.

The object of the present invention is to provide a connecting device for wires which overcomes the disadvantages of the known device of U.K. patent specification 1,467,309 and is therefore easier to use than this known device; in particular the object is to reduce or avoid obstruction of a jack by the wires being connected or by adjacent wires.

The invention as claimed is intended to achieve this result. The new arrangement of the bores in the device has the effect that the two bores are tilted with respect to each other, so that

(i) the wire inside the bores do not lie in a common plane thus minimizing obstruction, and

(ii) the device can be arranged (with the connected wires horizontal) so that a jack can be applied to both wires from above the device.

The invention is characterised in that the respective axes of the two bores are not parallel to each other but lie in parallel planes, and the permitted curvature of each wire adjacent the said second end of the bore being curvature out of the respective one of the said parallel planes to an extent such that at the respective second ends of the two bores the two wires lie substantially coaxially to each other. Preferably, at the end of each bore at which the wire is anchored, the bore has a frusto-conical portion whose conical axis coincides with said straight axis, the anchoring means being a longitudinally split frustoconical wedge.

Preferably the said straight axis portions of the bores are at least 30%, more preferably at least 50% of the length of the bores.

The preferred embodiment of the present invention will now be described in greater detail by way of example with reference to the accompanying drawings, in which:—

Fig. 1 shows the device embodying the invention connecting two lengths of wire;

Fig. 2 is an end view of the device of Fig. 1, with the wires and anchoring wedges omitted for clarity;

Fig. 3 is a section on the line III—III of Fig. 2, the plane of the section including the straight axis of one of the bores;

Fig. 4 is a side view, partly sectioned on the line IV—IV of Figure 2, the cutting plane of each bore being parallel to the respective bore axis; and

Fig. 5 is a section on the line V—V of Fig. 4.

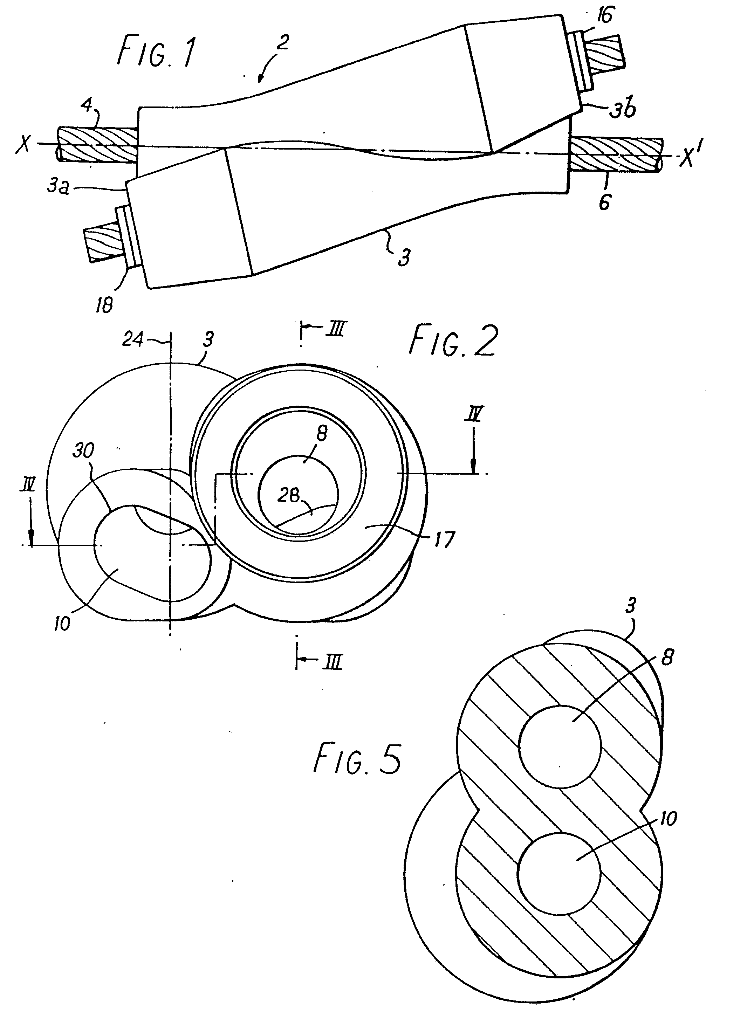

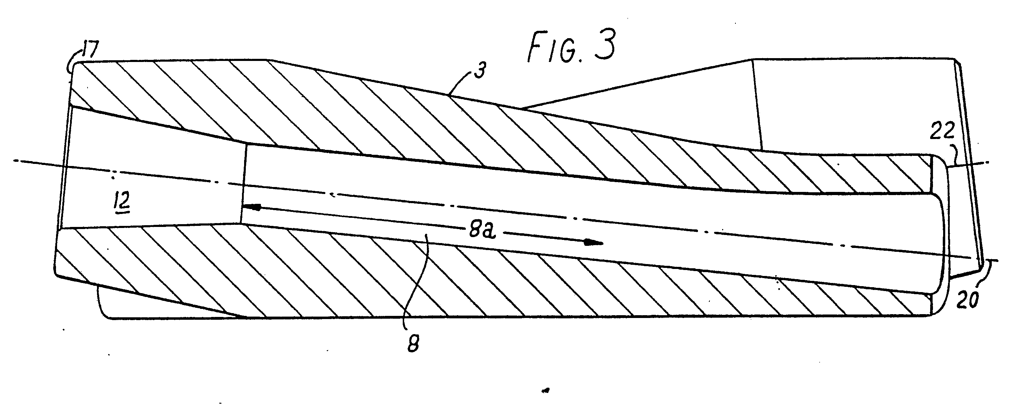

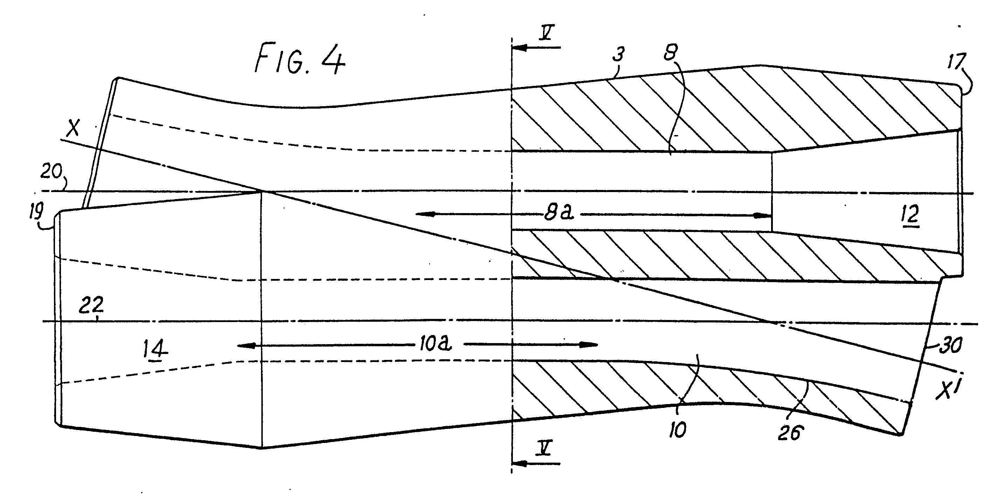

Referring to Figures 1 to 5, the illustrated device 2 is used to connect two tensioned lengths of wire 4 and 6. The device 2 primarily consists of a block 3. Two bores 8 and 10 which extend throughout the length of the block 3 from one end 3a thereof to the other end 3b thereof receive the wires 4 and 6 respectively. Each bore 8, 10 has a straight central portion 8a, 10a (Figs. 3 and 4) of substantially constant circular cross-section and two flared portions, one at each end of the bore. The first flared portions 12 and 14 are frustoconical and house anchoring means 16 and 18 in the form of split frusto-conical wedges which hold the wires 4 and 6 secure when tension is applied to the wires, with the tensioned lengths extending through the bores 8, 10. The frusto-conical portions 12, 14 are coaxial on axes 20, 22 with the constant-section portions 8a, 10a. The combined length of the portion 12 or 14 and the portion 8a or 10a in each case is more·than half the overall length of the bore 8 or 10, and constitutes a straight portion of the bore.

The mouths of the frusto-conical portions 12, 14 are surrounded by annuli 17, 19 perpendicular to the conical axes. These annuli 17, 19 form abutment surfaces for the jack which is applied to the block to tension the wires 4, 6.

It can be seen from Fig. 1 that the tensioned lengths 4, 6 of wire, where they emerge from the block 3, are coaxial on the line X—X'. As seen in Fig. 4, the straight axes 20, 22 of the bores appear parallel; as Fig. 3 shows they are however, at an angle to each other. In fact they lie in parallel planes, one of which (for the bore 8) is the plane of section in Fig. 3 and the other of which is indicated by the broken line 24 in Fig. 2.

In order that the tensioned wires 4, 6 may lie coaxially on the line X—X' (Figs. 1 and 4) as they emerge from the respective ends of the bores 8, 10 remote from the anchoring wedges, lengths of the bores adjacent these ends are flared, non-symmetrically with respect to the axes 20, 22. This is best seen in Figs. 2 and 4. Thus the interior wall of the block 3 bounding the bore 10 at the outside of the device (i.e. the side away from the other bore 8) is curved outwardly as indicated at 26 in Fig. 4. Consequently, an exit aperture 30 of the bore 10 at this end has an oval or slot shape. The major axis of this oval (see Fig. 2 is not perpendicular to the parallel plane 24 in which the axis 22 of the bore 10 lies, but is tilted. In the assembled state of the device, the tensioned wire 6 lies against this curved wall 26 at the outside of the bore 10 with the result that the axis of the wire is smoothly transformed from the straight axis 22 to the coaxial line X—X' of the two wires 4, 6. This curvature is in a plane perpendicular to the plane 24 (though, because the bore axis 22 is not perpendicular to the plane of the paper in Fig. 2, the long axis of the oval aperture 30 is tilted, as mentioned above. The corresponding aperture 28 of the bore 8 can partly be seen in Fig. 2). As seen in Fig. 4, the angle between the line X—X' and the axes 20, 22 is in each case 14°. As seen in Fig. 3, the corresponding angle between line X—X' and the axes 20, 22 is 6°. The bore 8 is shaped and arranged similarly to the bore 10.

The device herein illustrated has several main advantages over that of specification 1,467,309. In the latter, the tensioned lengths of the two wires outside the device and the lengths within the bores of the device all lie in the same plane. In the present device, there is no such common plane for the wires inside the bores; accordingly there is likely to be less interference from the wires with a jack applied to the device to tension a wire. Secondly, as Fig. 3 shows best, both axes 20, 22 (which are the axles along which a jack if applied) can be directed upwardly at an angle to the horizontal; this makes it much easier to apply the jack to both ends of the device when the device is located in amid a horizontal row of wires. Thirdly, the smooth curvature of the wires within the bores 8, 10 means that problems caused by friction during tensioning can be minimized, since sharp angles against which the wires would rub when being tensioned are avoided.

**Claims**

1. A device for connecting in series two wires (4, 6) which are to be placed under tension, said device comprising a block (3) having two opposite ends (3a, 3b), two bores (8, 10) each extending from one end to the other end of the block to receive the respective wires and two anchoring means (16, 18) respectively associated with respective first ends (12, 14) of the bores (8, 10) for anchoring the two tensioned lengths of the wires respectively at the opposite ends of the block with the tensioned lengths extending through the respective bores and exiting at respective second ends (28, 30) of the bores, each bore, over at least a substantial portion (8a and 12, 10a and 14) of its length extending away from said first end thereof, having a straight longitudinal axis (20, 22) and each bore being so shaped to permit the wire within the bore to curve away from said straight axis (20, 22) adjacent the second end (28, 30) of the bore, characterised in that the respective axes (20, 22) of the two bores (8, 10) are not parallel to each other but lie in parallel planes, and the permitted curvature of each wire adjacent the said second end (28, 30) of the bore being curvature out of the respective one of the said parallel planes to an extent such that at the respective second ends (28, 30) of the two bores the two wires lie substantially coaxially to each other.

2. A device according to claim 1 wherein at the end (12, 14) of each bore (8, 10) at which the wire is anchored, the bore has a frusto-conical portion (12, 14) whose conical axis coincides with said straight axis (20, 22), the anchoring means being a longitudinally split frustoconical wedge (16, 18).

**Revendications**

1. Dispositif pour conecter en série deux fils métalliques (4, 6) qui doivent être placés sous tension, ledit dispositif comprenant un bloc (3) ayant deux extrémités opposées (3a, 3b), deux alésages (8, 10) chacun s'étendant d'une extrémité à l'autre extrémité du bloc pour recevoir les fils métalliques respectifs et deux moyens d'ancrage (16, 18) respectivement associés aux premières extrémités respectives (12, 14) des alésages (8, 10) pour ancrer les deux longueurs sous tension des fils métalliques respectivement aux extrémités opposées du bloc avec les longueurs sous tension traversant les alésages respectifs et sortant aux secondes extrémités respectives (28, 30) des alésages, chaque alésage, sur au moins une partie sensible (8a et 12, 10a et 14) de sa longueur s'étendant au loin de sa première extrémité, ayant un axe longitudinal droit (20, 22) et chaque alésage étant configuré de façon à permettre au fil métallique dans l'alésage de se courber au loin dudit axe droit (20, 22) à proximité de la seconde extrémité (28, 30) de l'alésage, caractérisé en ce que les axes respectifs (20, 22) des deux alésages (8, 10) ne sont pas parallèles l'un à l'autre mais se trouvent dans des plans parallèles, et la courbure permise de chaque fil métallique à proximité de ladite seconde extrémité (28, 30) de l'alésage est une courbure hors du plan parallèle respectif au point qu'aux secondes extrémités respectives (28, 30) des deux alésages, les deux fils métalliques se trouvent sensiblement coaxialement l'un à l'autre.

2. Dispositif selon la revendication 1, où à l'extrémité (12, 14) de chaque alésage (8, 10) à laquelle le fil métallique est ancré, l'alésage a une partie tronconique (12, 14) dont l'axe du cône coïncide avec ledit axe droit (20, 22), le moyen d'ancrage étant un coin tronconique et longitudinalement fendu (16, 18).

**Patentansprüche**

1. Vorrichtung zum Verbinden von zwei Drähten (4, 6) od. dgl. in Serie, die unter Spannung gesetzt werden sollen, bestehend aus einem Block (3) mit zwei gegenüberliegenden Enden (3a, 3b) und zwei Bohrungen (8, 10), die sich jeweils von einem Ende zum anderen Ende des Blockes erstrecken um den entsprechenden Draht aufzunehmen, un aus zwei Verankerungsmitteln (16, 18), die entsprechenden ersten Enden (12, 14) der Bohrungen (8, 10) zugeordnet sind, um die gespannten Längsabschnitte der Drähte (4, 6) an den gegenüberliegenden Enden des Blockes (3) au verankern, wobei sich die gespannten Längenabschnitte der Drähte durch die entsprechenden Bohrungen erstrecken und an entsprechenden zweiten Enden (28, 30) der Bohrungen austreten, wobei jede Bohrung zumindest über einen wesentlichen Bereich (8a und 12 bzw. 10a und 14) ihrer Länge hinweg, der vom ersten Ende (12, 14) weg gerichtet ist, eine geradlinige Längsachse (20, 22) hat und jede Bohrung so ausgebildet ist, daß sich der Draht innerhalb der Bohrung nahe dem zweiten Ende (28, 30) der Bohrung von der geraden Längsachse weg krümmen kann, dadurch gekennzeichnet, daß die betreffenden Längsachsen der beiden Bohrungen (8, 10) nicht parallel sind, sondern in parallelen Ebenen liegen, und daß die mögliche Krümmung eines jeden Drahtes nahe dem zweiten Ende (28, 30) der Bohrung in einem solchen Maße aus der zugehörigen Ebene der beiden parallelen Ebenen heraus gekrümmt ist, daß die beiden Drähte (4, 6) an den zweiten Enden (28, 30) der beiden Bohrungen (8, 10) im wesentlichen koaxial sind.

2. Vorrichtung nach Anspruch 1, dadurch gekennzeichnet, daß die Bohrungen (8, 10) an demjenigen Ende, an dem der Draht verankert ist, einen kegelstumpfförmigen Bereich (12, 14) haben, dessen Achse mit der geradlinigen Achse (20, 22) zusammenfällt, wobei die Verankerungsmittel aus einem in Längsrichtung geschlitzten kegelstumpfförmigen Keil (16, 18) bestehen.

FIG. 1

FIG. 2

FIG. 5

0 005 075

FIG. 3

FIG. 4

0 005 075